# EUROPEAN PATENT APPLICATION

(11) **EP 4 694 466 A1**
(43) Date of publication of application: **11.02.2026**
(21) Application number: 23931516.1
(22) Date of filing: 07.04.2023
(51) Int. Cl.: H04W 72/115

(54) **METHOD AND APPARATUS FOR DETERMINING PSSCH RESOURCE, COMMUNICATION DEVICE, AND STORAGE MEDIUM**

(71) Applicant: Beijing Xiaomi Mobile Software Co., Ltd., Beijing 100085 (CN)
(72) Inventor: ZHAO, Wensu, Beijing 100085 (CN); ZHAO, Qun, Beijing 100085 (CN)
(74) Representative: Gunzelmann, Rainer
(86) International application number: PCT/CN2023/086966
(87) International publication number: WO 2024/207455

(57) **Abstract**

Embodiments of the present disclosure provide a method and apparatus for determining a physical sidelink shared channel (PSSCH) resource, a communication device, and a storage medium. The method comprises: determining a target physical shared feedback channel (PSFCH) occasion among M PSFCH occasions mapped by a PSSCH where a transport block (TB) is located; and on the basis of the target PSFCH occasion, determining a minimum time interval for any two PSSCH resources selected for the TB, wherein a time interval between any two PSSCH resources selected for one TB is not less than the minimum time interval, the PSSCH resources are unlicensed frequency band resources and are used for transmission and retransmission of the TB, a first PSSCH of any two PSSCHs supports HARQ feedback, and M is an integer greater than 1. In this way, when TB transmission is carried out on the basis of the unlicensed frequency band PSSCH resource, it can be ensured that the minimum time interval is met between any two PSSCH resources selected for the TB, thereby ensuring that the TB supports retransmission based on the HARQ feedback.

## Description

### FIELD

The disclosure relates to, but is not limited to the field of wireless communication technologies, and in particular relates to a method and an apparatus for determining a physical sidelink shared channel (PSSCH) resource, a communication device and a storage medium.

### BACKGROUND

In wireless communication technology, a sidelink (SL) unlicensed frequency band may support a transmission of a transport block (TB). In order to satisfy the reliability of TB transmission, a hybrid automatic repeat request (HARQ) mechanism may be introduced. In a case where the TB supports the HARQ mechanism, the selection of TB transmission resources is a problem that needs to be considered.

### SUMMARY

Embodiments of the disclosure provide a method and an apparatus for determining a PSSCH resource, a communication device and a storage medium.

According to a first aspect of embodiments of the disclosure, a method for determining a PSSCH resource is provided, which is performed by a first terminal. The method includes:
determining a target physical sidelink feedback channel (PSFCH) occasion from M PSFCH occasions mapped by a PSSCH where a TB is located; and
determining, according to the target PSFCH occasion, a minimum time gap between any two PSSCH resources selected for the TB,
in which a time gap between any two PSSCH resources selected for one TB is not less than the minimum time gap; the PSSCH resource is an unlicensed frequency band resource and is used for transmitting the TB; a first PSSCH of any two PSSCHs supports a HARQ feedback; and M is an integer greater than 1.

According to a second aspect of embodiments of the disclosure, a method for transmitting a PSSCH resource is provided, which is performed by a second terminal. The method includes:
receiving a TB sent by a first terminal from PSFCH resources,
in which a time gap between any two PSSCH resources selected for one TB is not less than a minimum time gap; the minimum time gap is a time gap determined according to a target PSFCH occasion determined from M PSFCH occasions mapped by a PSSCH where the TB is located; the PSSCH resource is an unlicensed frequency band resource and is used for transmitting the TB; a first PSSCH of any two PSSCHs supports a HARQ feedback; and M is an integer greater than 1.

According to a third aspect of embodiments of the disclosure, an apparatus for determining a PSSCH resource is provided, which includes:
a determining module configured to determine a target PSFCH occasion from M PSFCH occasions mapped by a PSSCH where a TB is located; and determine, according to the target PSFCH occasion, a minimum time gap between any two PSSCH resources selected for the TB, in which a time gap between any two PSSCH resources selected for one TB is not less than the minimum time gap; the PSSCH resource is an unlicensed frequency band resource and is used for transmitting the TB; a first PSSCH of any two PSSCHs supports a HARQ feedback; and M is an integer greater than 1.

According to a fourth aspect of embodiments of the disclosure, an apparatus for transmitting a PSSCH resource is provided, which includes:
a receiving module configured to receive a TB sent by a first terminal from PSFCH resources,
in which a time gap between any two PSSCH resources selected for one TB is not less than a minimum time gap; the minimum time gap is a time gap determined according to a target PSFCH occasion determined from M PSFCH occasions mapped by a PSSCH where the TB is located; the PSSCH resource is an unlicensed frequency band resource and is used for transmitting the TB; a first PSSCH of any two PSSCHs supports a HARQ feedback; and M is an integer greater than 1.

According to a fifth aspect of embodiments of the disclosure, a communication device is provided, which includes:
a processor; and
a memory for storing instructions executable by the processor,
in which the processor executes the method described in any embodiment of the disclosure when running the executable programs.

According to a sixth aspect of embodiments of the disclosure, there is provided a computer storage medium having stored therein executable programs that, when executed by a processor, cause the method described in any embodiment of the disclosure to be implemented.

According to the embodiments of the disclosure, the target PSFCH occasion is determined from the M PSFCH occasions mapped by the PSSCH where the TB is located; and the minimum time gap between any two PSSCH resources selected for the TB is determined according to the target PSFCH occasion, in which the time gap between any two PSSCH resources selected for one TB is not less than the minimum time gap; the PSSCH resource is the unlicensed frequency band resource and is used for transmitting the TB; the first PSSCH of any two PSSCHs supports the HARQ feedback; and M is the integer greater than 1. The minimum time gap between any two PSSCH resources selected for the TB may be determined according to the target PSFCH occasion determined from the M PSFCH occasions mapped by the PSSCH where the TB is located, and the time gap between any two PSSCH resources selected for one TB is not less than the minimum time gap. In this way, in a case where the TB is transmitted according to the unlicensed frequency band PSSCH resource, it is possible to ensure that the minimum time gap is satisfied between any two PSSCH resources selected for the TB, and thus ensuring that the TB supports a retransmission according to the HARQ feedback.

### BRIEF DESCRIPTION OF THE DRAWINGS

FIG. 1 is a schematic diagram illustrating a wireless communication system according to an embodiment.
FIG. 2 is a flow chart illustrating a method for determining a PSSCH resource according to an embodiment.
FIG. 3 is a flow chart illustrating a method for determining a PSSCH resource according to an embodiment.
FIG. 4 is a flow chart illustrating a method for determining a PSSCH resource according to an embodiment.
FIG. 5 is a flow chart illustrating a method for determining a PSSCH resource according to an embodiment.
FIG. 6 is a flow chart illustrating a method for determining a PSSCH resource according to an embodiment.
FIG. 7 is a flow chart illustrating a method for determining a PSSCH resource according to an embodiment.
FIG. 8 is a flow chart illustrating a method for determining a PSSCH resource according to an embodiment.
FIG. 9 is a flow chart illustrating a method for determining a PSSCH resource according to an embodiment.
FIG. 10 is a flow chart illustrating a method for transmitting a PSSCH resource according to an embodiment.
FIG. 11 is a flow chart illustrating a method for transmitting a PSSCH resource according to an embodiment.
FIG. 12 is a flow chart illustrating a method for transmitting a PSSCH resource according to an embodiment.
FIG. 13 is a flow chart illustrating a method for transmitting a PSSCH resource according to an embodiment.
FIG. 14 is a flow chart illustrating a method for transmitting a PSSCH resource according to an embodiment.
FIG. 15 is a block diagram illustrating an apparatus for determining a PSSCH resource according to an embodiment.
FIG. 16 is a block diagram illustrating an apparatus for transmitting a PSSCH resource according to an embodiment.
FIG. 17 is a block diagram illustrating a terminal according to an embodiment.
FIG. 18 is a block diagram illustrating a base station according to an embodiment.

### DETAILED DESCRIPTION

Reference is now made in detail to embodiments, examples of which are illustrated in the accompanying drawings. The following description refers to the accompanying drawings in which the same numbers in different drawings represent the same or similar elements unless otherwise represented. The implementations set forth in the following description of embodiments do not represent all implementations consistent with the disclosure. Instead, they are merely examples of apparatuses and methods consistent with aspects related to embodiments of the disclosure.

Terms used herein in embodiments of the disclosure are only for the purpose of describing specific embodiments, but should not be construed to limit embodiments of the disclosure. As used in the embodiments of the disclosure, "a/an", "said" and "the" in singular forms are intended to include plural forms, unless clearly indicated in the context otherwise. It should also be understood that, the term "and/or" used herein represents and contains any or all possible combinations of one or more associated listed items.

It should be understood that, although terms such as "first," "second" and "third" may be used in embodiments of the disclosure for describing various information, these information should not be limited by these terms. These terms are only used for distinguishing information of the same type from each other. For example, first information may also be referred to as second information, and similarly, the second information may also be referred to as the first information, without departing from the scope of embodiments of the disclosure. As used herein, the term "if" may be construed to mean "when" or "upon" or "in response to determining" depending on the context.

For purposes of brevity and ease of understanding, the terms used herein for describing the relationship of size are "greater than" or "less than". However, it may be understood to those skilled in the art that the term "greater than" also encompasses the meaning of "greater than or equal to", and the term "less than" also encompasses the meaning of "less than or equal to".

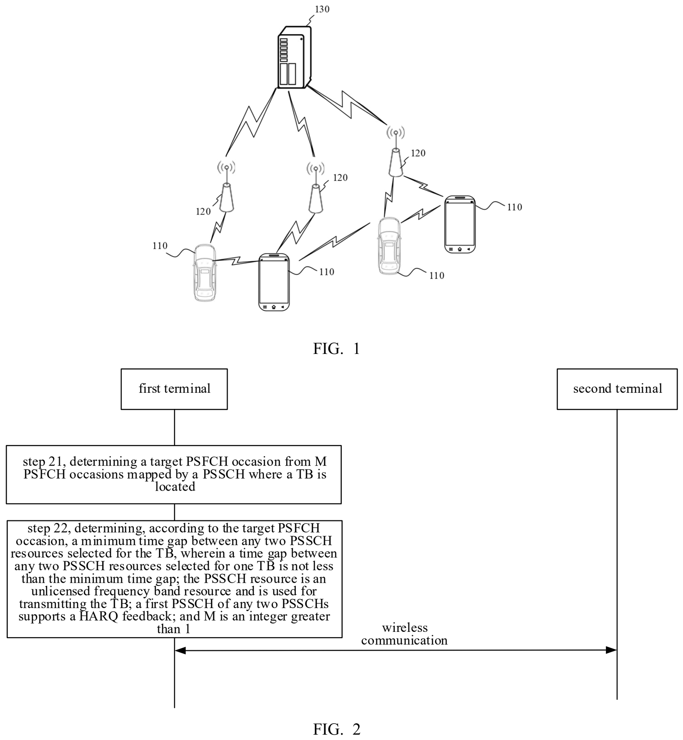

Reference is made to FIG. 1, which is a schematic diagram showing a wireless communication system according to an embodiment of the disclosure. As shown in FIG. 1, the wireless communication system is a communication system based on mobile communication technologies, and may include several user equipments (UEs) 110 and several base stations 120.

The UE 110 may be a device that provides voice and/or data connectivity to a user. The UE 110 may communicate with one or more core networks via a radio access network (RAN). The UE 110 may be an Internet of Things terminal, such as a sensor device, a mobile phone and a computer with an Internet of Things terminal. For example, the UE 110 may be a fixed, portable, pocket-sized, handheld, computer built-in or vehicle-mounted apparatus. For example, the UE 110 may be a station (STA), a subscriber unit, a subscriber station, a mobile station, a mobile, a remote station, an access point, a remote terminal, an access terminal, a user terminal, a user agent, a user device, or a UE. Alternatively, the UE 110 may also be a device of an unmanned aerial vehicle. Alternatively, the UE 110 may also be a vehicle-mounted device, for example, a driving computer with a wireless communication function, or a wireless communication device externally connected with a driving computer. Alternatively, the UE 110 may be a roadside device, such as a street lamp, a signal lamp or other roadside devices with a wireless communication function.

The base station 120 may be a network side device in the wireless communication system. The wireless communication system may be a 4th generation mobile communication (4G) system, also referred to as a long term evolution (LTE) system. Alternatively, the wireless communication system may also be a 5G system, also referred to as a new radio (NR) system or a 5G NR system. Alternatively, the wireless communication system may also be a next generation system of the 5G system. The access network in the 5G system may be referred to as a new generation-radio access network (NG-RAN).

The base station 120 may be an evolved base station (eNB) used in the 4G system. Alternatively, the base station 120 may also be a centralized distributed architecture base station (gNB) in the 5G system. When the base station 120 adopts the centralized distributed architecture, it usually includes a central unit (CU) and at least two distributed units (DUs). A protocol stack of a packet data convergence protocol (PDCP) layer, a radio link control (RLC) layer and a media access control (MAC) layer is provided in the central unit. A protocol stack of a physical (PHY) layer is provided in the distributed unit. The specific implementation of the base station 120 is not limited in the embodiments of the disclosure.

A wireless connection may be established between the base station 120 and the UE 110 through a wireless air interface. In different embodiments, the wireless air interface is a wireless air interface based on the 4th generation mobile communication network technology (4G) standard. Alternatively, the wireless air interface is a wireless air interface based on the 5th generation mobile communication network technology (5G) standard. For example, the wireless air interface is the NR. Alternatively, the wireless air interface may also be a wireless air interface based on the next generation mobile communication network technology standard of the 5G.

In some embodiments, an end to end (E2E) connection may also be established between the UEs 110, for example, a vehicle to vehicle (V2V) communication, a vehicle to infrastructure (V2I) communication and a vehicle to pedestrian (V2P) communication in a vehicle to everything (V2X) communication.

The above-mentioned UE may be considered as the terminal of the following embodiments.

In some embodiments, the wireless communication system may further include a network management device 130.

Several base stations 120 are connected to the network management device 130, respectively. The network management device 130 may be a core network device in the wireless communication system, for example, the network management device 130 may be a mobility management entity (MME) in an evolved packet core (EPC). Alternatively, the network management device may be other core network devices, such as a serving gateway (SGW), a public data network gateway (PGW), a policy and charging rules function (PCRF) or a home subscriber server (HSS). The implementation form of the network management device 130 is not limited in the embodiment of the disclosure.

In order to facilitate understanding by those skilled in the art, the embodiments of the disclosure list a plurality of implements to clearly explain the technical solutions of the embodiments of the disclosure. Of course, those skilled in the art will understand that the plurality of implements provided by the embodiments of the disclosure may be performed alone, or may be performed in combination with possible implementations in other embodiments, or may be performed in combination with any technical solution in the related art, which is not limited in the disclosure.

In order to better understand the embodiments of the disclosure, application scenarios in the wireless communication are described below.

In an embodiment, in the design of an SL licensed frequency band, when a resource pool is configured with a PSFCH resource and a retransmission supporting a HARQ feedback is configured, it is necessary to ensure that a minimum time gap X is satisfied between any two PSSCH resources (between an initial transmission resource and a retransmission resource, or between a retransmission resource and a retransmission resource) selected for one TB, where X=a+b. Here, "a" may represent a time gap between an end position of the last symbol for transmitting a PSSCH in a resource selected for the TB and a start position of the first symbol for receiving a PSFCH corresponding to the PSSCH, and the position for receiving the PSFCH is determined by sl-MinTimeGapPSFCH and sl-PSFCH-Period of the resource pool; and "b" may represent a time required for PSFCH reception and processing, as well as SL retransmission preparation. The time required for the PSFCH reception and processing includes a necessary processing time for multiplexing of physical channels and a handover time for any transmit-to-receive (TX-RX) or receive-to-transmit (RX-TX).

In an embodiment, in SL communication, the minimum time gap a+b needs to be satisfied between any two resources selected for one TB, where "a" represents the time gap between the end position of the last symbol for transmitting the PSSCH in a first resource and the start position of the first symbol for receiving the PSFCH corresponding to the PSSCH, and "b" represents the time required for PSFCH reception and processing, as well as SL retransmission preparation, including the necessary processing time for multiplexing of physical channels and the handover time for any TX-RX or RX-TX. In the SL communication, one PSSCH corresponds to only one PSFCH occasion, thus the value of "a" is calculated according to the one PSFCH occasion. In a case where the SL operates in an unlicensed frequency band, one PSSCH may support a plurality of PSFCH occasions via a one-to-many mapping between the PSSCH and the PSFCH, and the transmission of the TB supports a retransmission based on the HARQ feedback. However, there is no corresponding solution for which PSFCH occasion to use for calculating the minimum time gap a+b and selecting a retransmission resource according to the minimum time gap.

As shown in FIG. 2, an embodiment of the disclosure provides a method for determining a PSSCH resource, performed by a first terminal, including the following steps.

In step 21, a target PSFCH occasion is determined from M PSFCH occasions mapped by a PSSCH where a TB is located.

In step 22, a minimum time gap between any two PSSCH resources selected for the TB is determined according to the target PSFCH occasion, in which a time gap between any two PSSCH resources selected for one TB is not less than the minimum time gap. The PSSCH resource is an unlicensed frequency band resource and is used for transmitting the TB. A first PSSCH of any two PSSCHs supports a HARQ feedback. M is an integer greater than 1.

The terminal involved in the disclosure may be, but is not limited to, a mobile phone, a wearable device, an in-vehicle terminal, a road side unit (RSU), a smart home terminal, an industrial sensing device, and/or a medical device. In some embodiments, the terminal may be a Redcap terminal or a NR terminal with a predetermined version (e.g., a NR terminal of R17).

In an embodiment, the first terminal and a second terminal involved in the disclosure may be two terminals for the SL communication, the first terminal may be a terminal sending the TB, the second terminal may be a terminal receiving the TB, "first terminal" and "sending end" may be replaced with each other, and "second terminal" and "receiving end" may be replaced with each other.

In an embodiment, the target PSFCH occasion is determined from the M PSFCH occasions mapped by the PSSCH where the TB is located. The minimum time gap between any two PSSCH resources selected for the TB is determined according to the target PSFCH occasion. In a case where the target PSFCH occasion is the M^{th} one of the M PSFCH occasions, the minimum time gap is a sum of a first time gap and a second time gap. The first time gap is a time gap between an end position of the last symbol used for transmitting the PSSCH in a first PSSCH resource and a start position of the first symbol used for receiving a PSFCH in the target PSFCH occasion. The time gap between any two PSSCH resources selected for one TB is not less than the minimum time gap. The PSSCH resource is the unlicensed frequency band resource and is used for transmitting the TB. The first PSSCH of any two PSSCHs supports the HARQ feedback. M is an integer greater than 1.

In an embodiment, the second time gap is a sum of a time for receiving the PSFCH, a time for processing the PSFCH, and a time required for an SL retransmission preparation.

In an embodiment, the time for receiving and processing the PSFCH includes a necessary processing time for multiplexing of physical channels and the handover time for any TX-RX or RX-TX.

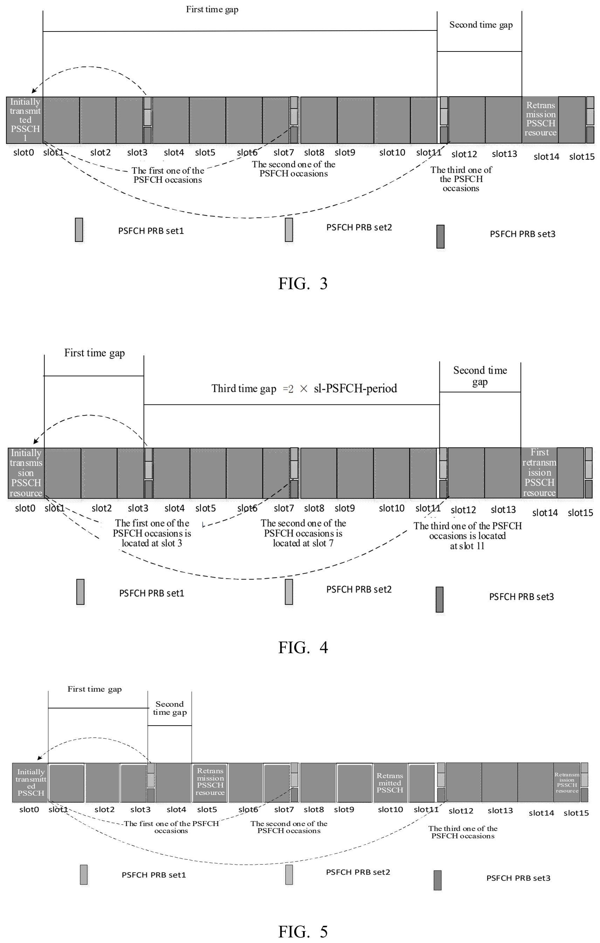

In an embodiment, the target PSFCH occasion is determined from the M PSFCH occasions mapped by the PSSCH where the TB is located. The minimum time gap between any two PSSCH resources selected for the TB is determined according to the target PSFCH occasion. In a case where the target PSFCH occasion is the M^{th} one of the M PSFCH occasions, the minimum time gap is the sum of the first time gap and the second time gap. The first time gap is the time gap between the end position of the last symbol used for transmitting the PSSCH in the first PSSCH resource and the start position of the first symbol used for receiving the PSFCH in the target PSFCH occasion. The second time gap includes the time for receiving the PSFCH, the time for processing the PSFCH, and the time required for the SL retransmission preparation. The time gap between any two PSSCH resources selected for one TB is not less than the minimum time gap. The PSSCH resource is the unlicensed frequency band resource and is used for transmitting the TB. The first PSSCH of any two PSSCHs supports the HARQ feedback. M is an integer greater than 1. For example, referring to FIG. 3, the first time gap is the time gap between the end position of the last symbol used for transmitting the PSSCH in the first PSSCH resource and the start position of the first symbol used for receiving the PSFCH in the target PSFCH occasion, which is 11 slots. The second time gap is a predetermined value. For example, when the predetermined value is 2 slots, the minimum time gap to be satisfied between an initial transmission PSSCH resource and a retransmitted PSSCH resource selected for the TB is 13 slots (i.e., 11 slots+2 slots), and a PSSCH resource located at slot14 may be selected for retransmission.

In an embodiment, the target PSFCH occasion is determined from the M PSFCH occasions mapped by the PSSCH where the TB is located. The minimum time gap between any two PSSCH resources selected for the TB is determined according to the target PSFCH occasion. In a case where the target PSFCH occasion is the first one of the M PSFCH occasions, the minimum time gap is a sum of a first time gap and a second time gap. The first time gap is the time gap between the end position of the last symbol used for transmitting the PSSCH in the first PSSCH resource and the start position of the first symbol used for receiving the PSFCH in the target PSFCH occasion. The time gap between any two PSSCH resources selected for one TB is not less than the minimum time gap. The PSSCH resource is the unlicensed frequency band resource and is used for transmitting the TB. The first PSSCH of any two PSSCHs supports the HARQ feedback. M is an integer greater than 1.

In an embodiment, the second time gap is a sum of a time for receiving the PSFCH at the M^{th} one of the M PSFCH occasions, a time for processing the PSFCH, and a time required for the SL retransmission preparation.

In an embodiment, the time for receiving and processing the PSFCH includes a necessary processing time for multiplexing of physical channels and the handover time for any TX-RX or RX-TX. In an embodiment, the target PSFCH occasion is determined from the M PSFCH occasions mapped by the PSSCH where the TB is located, and the minimum time gap between any two PSSCH resources selected for the TB is determined according to the target PSFCH occasion. The minimum time gap is the sum of the first time gap and the second time gap in a case where the target PSFCH occasion is the first one of the M PSFCH occasions, in which the first time gap is the time gap between the end position of the last symbol used for transmitting the PSSCH in the first PSSCH resource and the start position of the first symbol used for receiving the PSFCH in the target PSFCH occasion, and the second time gap includes the time for receiving the PSFCH at the M^{th} one of the M PSFCH occasions, the time for processing the PSFCH, and the time required for the SL retransmission preparation. The time gap between any two PSSCH resources selected for one TB is not less than the minimum time gap. The PSSCH resource is the unlicensed frequency band resource and is used for transmitting the TB. The first PSSCH of any two PSSCHs supports the HARQ feedback. M is an integer greater than 1. For example, in a case where sl-MinTimeGapPSFCH=3 slots and sl-PSFCH-Period=4 slots, the first terminal sends a PSSCH1 on slot 0, and the PSSCH1 maps three PSFCH occasions, respectively located at slot 3, slot 7, and slot 11. When the minimum gap to be satisfied between any two resources selected for the TB is determined based on the first one of the PSFCH occasions (i.e. slot 3), for example, a+b=4 slots, where a is the first time gap and b is the second time gap, the retransmission resources located at slot 5, slot 10, and slot 15 are selected. In an embodiment, when the PSFCH occasion fails in listen-before-talk (LBT) on slot 3 and slot 7, and the first terminal does not receive HARQ information, the retransmission resources located on slot 5 and slot 10 selected by the first terminal are not used for transmitting data.

In an embodiment, the target PSFCH occasion is determined from the M PSFCH occasions mapped by the PSSCH where the TB is located, and the minimum time gap between any two PSSCH resources selected for the TB is determined according to the target PSFCH occasion. The minimum time gap is a sum of a first time gap, a second time gap and a third time gap in a case where the target PSFCH occasion is the first one of the M PSFCH occasions. The first time gap is the time gap between the end position of the last symbol used for transmitting the PSSCH in the first PSSCH resource and the start position of the first symbol used for receiving the PSFCH in the target PSFCH occasion. The time gap between any two PSSCH resources selected for one TB is not less than the minimum time gap. The PSSCH resource is the unlicensed frequency band resource and is used for transmitting the TB. The first PSSCH of any two PSSCHs supports the HARQ feedback. M is an integer greater than 1.

In an embodiment, the second time gap is the sum of the time for receiving the PSFCH, the time for processing the PSFCH, and the time required for the SL retransmission preparation.

In an embodiment, the third time gap is (M-1) SL PSFCH periods.

In an embodiment, the time for receiving and processing the PSFCH includes the necessary processing time for multiplexing of physical channels and the handover time for any TX-RX or RX-TX.

In an embodiment, the target PSFCH occasion is determined from the M PSFCH occasions mapped by the PSSCH where the TB is located, and the minimum time gap between any two PSSCH resources selected for the TB is determined according to the target PSFCH occasion. The minimum time gap is the sum of the first time gap, the second time gap and the third time gap in a case where the target PSFCH occasion is the first one of the M PSFCH occasions, in which the first time gap is the time gap between the end position of the last symbol used for transmitting the PSSCH in the first PSSCH resource and the start position of the first symbol used for receiving the PSFCH in the target PSFCH occasion, the second time gap includes the time for receiving the PSFCH, the time for processing the PSFCH, and the time required for the SL retransmission preparation, and the third time gap is (M-1) SL PSFCH periods. The time gap between any two PSSCH resources selected for one TB is not less than the minimum time gap. The PSSCH resource is the unlicensed frequency band resource and is used for transmitting the TB. The first PSSCH of any two PSSCHs supports the HARQ feedback. M is an integer greater than 1. The SL PSFCH period may be sl-PSFCH-Period.

For example, referring to FIG. 4, the first time gap is 3 slots, the second time gap is 8 slots, and the third time gap is 2 slots. According to the minimum time gap, a gap between a first retransmission resource and an initial transmission resource selected for the TB is 13 slots, that is, the PSSCH resource located at slot14 is selected. It should be noted that each PSFCH occasion is located on the last three symbols of one slot, that is, on symbols 11, 12, and 13 of one slot (symbol 0 is a start symbol).

For example, sl-MinTimeGapPSFCH=3 slots, sl-PSFCH-Period=4 slots, the PSSCH1 is sent on slot 0, and the PSSCH maps 3 PSFCH occasions, which are located in slot 3, slot 7 and slot 11 respectively. The minimum gap X to be satisfied between any two resources selected for the TB is determined by the third one of the PSFCH occasions, where X=a+b+2×4=14 slots, and thus the retransmission resource selected for the PSSCH sent on slot 0 needs to be 14 slots apart from slot 0, and the retransmission resource located on slot 15 may be selected.

In an embodiment, the target PSFCH occasion is determined from the M PSFCH occasions mapped by the PSSCH where the TB is located, and the minimum time gap between any two PSSCH resources selected for the TB is determined according to the target PSFCH occasion. The minimum time gap is a sum of a first time gap and a second time gap in a case where the target PSFCH occasion is the first one of the M PSFCH occasions, in which the first time gap is the time gap between the end position of the last symbol used for transmitting the PSSCH in the first PSSCH resource and the start position of the first symbol used for receiving the PSFCH in the target PSFCH occasion. The time gap between any two PSSCH resources selected for one TB is not less than the minimum time gap. The PSSCH resource is the unlicensed frequency band resource and is used for transmitting the TB. The first PSSCH of any two PSSCHs supports the HARQ feedback. M is an integer greater than 1.

In an embodiment, the second time gap is the sum of the time for receiving the PSFCH, the time for processing the PSFCH, and the time required for the SL retransmission preparation.

In an embodiment, the time for receiving and processing the PSFCH includes the necessary processing time for multiplexing of physical channels and the handover time for any TX-RX or RX-TX.

In an embodiment, the target PSFCH occasion is determined from the M PSFCH occasions mapped by the PSSCH where the TB is located, and the minimum time gap between any two PSSCH resources selected for the TB is determined according to the target PSFCH occasion. The minimum time gap is the sum of the first time gap and the second time gap in a case where the target PSFCH occasion is the first one of the M PSFCH occasions, in which the first time gap is the time gap between the end position of the last symbol used for transmitting the PSSCH in the first PSSCH resource and the start position of the first symbol used for receiving the PSFCH in the target PSFCH occasion, and the second time gap includes the time for receiving the PSFCH, the time for processing the PSFCH, and the time required for the SL retransmission preparation. The time gap between any two PSSCH resources selected for one TB is not less than the minimum time gap. The PSSCH resource is the unlicensed frequency band resource and is used for transmitting the TB. The first PSSCH of any two PSSCHs supports the HARQ feedback. M is an integer greater than 1.

For example, referring to FIG. 5, sl-MinTimeGapPSFCH=3 slots, sl-PSFCH-Period=4 slots, the PSSCH1 is sent on slot 0, and the PSSCH1 maps 3 PSFCH occasions, which are located in slot 3, slot 7 and slot 11 respectively. The minimum gap to be satisfied between any two resources selected for the TB is determined by the first one of the PSFCH occasions. For example, a+b=4 slots, where a is the first time gap, and b is the second time gap, the retransmission resources located in slot 5, slot 10 and slot 15 are selected. When the first terminal successfully performs the LBT on the first one of the PSFCH occasions on slot 3 and sends negative acknowledgment (NACK), a sending UE may use the retransmission resource on slot 5 to perform the retransmission as early as possible, thereby reducing a retransmission delay.

In an embodiment, the target PSFCH occasion is determined from the M PSFCH occasions mapped by the PSSCH where the TB is located, and the minimum time gap between any two PSSCH resources selected for the TB is determined according to the target PSFCH occasion. The minimum time gap is a sum of a first time gap and a second time gap in a case where the target PSFCH occasion is the first one of the M PSFCH occasions. The first time gap is the time gap between the end position of the last symbol used for transmitting the PSSCH in the first PSSCH resource and the start position of the first symbol used for receiving the PSFCH in the target PSFCH occasion, and the second time gap includes the time for receiving the PSFCH, the time for processing the PSFCH, and the time required for the SL retransmission preparation. The time for receiving and processing the PSFCH includes the necessary processing time for multiplexing of physical channels and the handover time for any TX-RX or RX-TX. The time gap between any two PSSCH resources selected for one TB is not less than the minimum time gap. The PSSCH resource is the unlicensed frequency band resource and is used for transmitting the TB. The first PSSCH of any two PSSCHs supports the HARQ feedback. M is an integer greater than 1. In a case where HARQ information is not received at the first one of the M PSFCH occasions, a retransmission resource selected is used to perform a retransmission; in a case where HARQ information is not received at the N^{th} one of the M PSFCH occasions, a retransmission resource selected is not used to perform a retransmission, in which N is an integer, and 1 ≦ N ≦ M; and in a case where HARQ information is not received at the M^{th} one of the M PSFCH occasions, a retransmission resource selected is used to perform a retransmission.

In an embodiment, the target PSFCH occasion is determined from the M PSFCH occasions mapped by the PSSCH where the TB is located, and the minimum time gap between any two PSSCH resources selected for the TB is determined according to the target PSFCH occasion. The time gap between any two PSSCH resources selected for one TB is not less than the minimum time gap. The PSSCH resource is the unlicensed frequency band resource and is used for transmitting the TB. The first PSSCH of any two PSSCHs supports the HARQ feedback. M is an integer greater than 1. The TB is sent to the second terminal on the PSSCH resources selected for the TB.

In the embodiments of the disclosure, the target PSFCH occasion is determined from the M PSFCH occasions mapped by the PSSCH where the TB is located, and the minimum time gap between any two PSSCH resources selected for the TB is determined according to the target PSFCH occasion. The time gap between any two PSSCH resources selected for one TB is not less than the minimum time gap. The PSSCH resource is the unlicensed frequency band resource and is used for transmitting the TB. The first PSSCH of any two PSSCHs supports the HARQ feedback. M is an integer greater than 1. The minimum time gap between any two PSSCH resources selected for the TB may be determined according to the target PSFCH occasion determined from the M PSFCH occasions mapped by the PSSCH where the TB is located, and the time gap between any two PSSCH resources selected for one TB is not less than the minimum time gap. In this way, in a case where the TB is transmitted according to the unlicensed frequency band PSSCH resource, it is possible to ensure that the minimum time gap is satisfied between any two selected PSSCH resources.

It should be noted that the method provided by the embodiments of the disclosure may be performed alone, or may be performed in combination with some methods in the embodiments, or may be performed in combination with some methods in the related art.

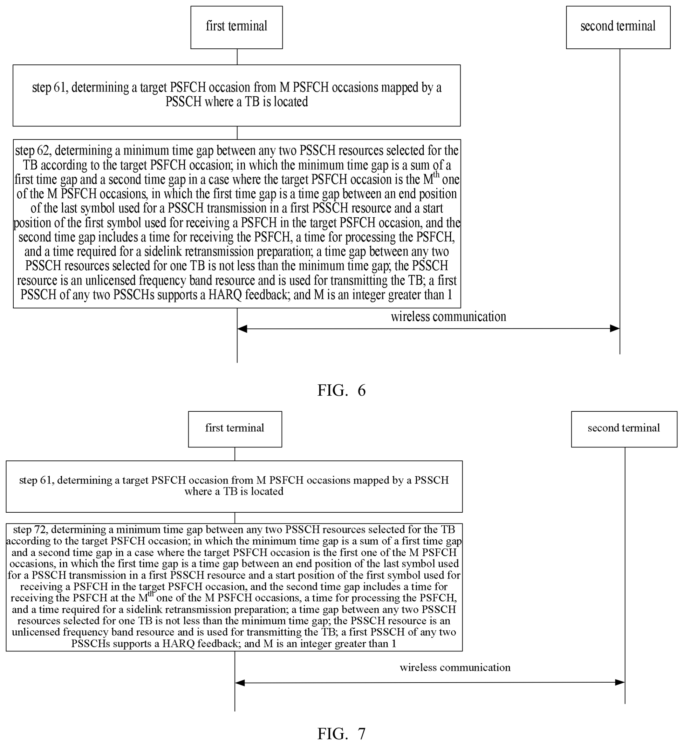

As shown in FIG. 6, an embodiment provides a method for determining a PSSCH resource, performed by a first terminal, including the following steps.

In step 61, a target PSFCH occasion is determined from M PSFCH occasions mapped by a PSSCH where a TB is located.

In step 62, a minimum time gap between any two PSSCH resources selected for the TB is determined according to the target PSFCH occasion, in which the minimum time gap is a sum of a first time gap and a second time gap in a case where the target PSFCH occasion is the M^{th} one of the M PSFCH occasions, where the first time gap is a time gap between an end position of the last symbol used for transmitting the PSSCH in a first PSSCH resource and a start position of the first symbol used for receiving a PSFCH in the target PSFCH occasion, and the second time gap includes a time for receiving the PSFCH, a time for processing the PSFCH, and a time required for the SL retransmission preparation. A time gap between any two PSSCH resources selected for one TB is not less than the minimum time gap. The PSSCH resource is an unlicensed frequency band resource and is used for transmitting and retransmitting the TB. A first PSSCH of any two PSSCHs supports a HARQ feedback. M is an integer greater than 1.

In an embodiment, the time for receiving and processing the PSFCH includes a necessary processing time for multiplexing of physical channels and a handover time for any TX-RX or RX-TX.

For details on steps 61 and 62, please refer to steps 21 and 22, which will not be repeated here.

It should be noted that the method provided by the embodiments of the disclosure may be performed alone, or may be performed in combination with some methods in the embodiments, or may be performed in combination with some methods in the related art.

As shown in FIG. 7, an embodiment provides a method for determining a PSSCH resource, performed by a first terminal, including the following steps.

In step 71, a target PSFCH occasion is determined from M PSFCH occasions mapped by a PSSCH where a TB is located.

In step 72, a minimum time gap between any two PSSCH resources selected for the TB is determined according to the target PSFCH occasion, in which the minimum time gap is a sum of a first time gap and a second time gap in a case where the target PSFCH occasion is the first one of the M PSFCH occasions, where the first time gap is a time gap between an end position of the last symbol used for transmitting the PSSCH in a first PSSCH resource and a start position of the first symbol used for receiving a PSFCH in the target PSFCH occasion, and the second time gap includes a time for receiving the PSFCH at the M^{th} one of the M PSFCH occasions, a time for processing the PSFCH, and a time required for an SL retransmission preparation. A time gap between any two PSSCH resources selected for one TB is not less than the minimum time gap. The PSSCH resource is an unlicensed frequency band resource and is used for transmitting the TB. A first PSSCH of any two PSSCHs supports a HARQ feedback. M is an integer greater than 1.

In an embodiment, the time for receiving and processing the PSFCH includes a necessary processing time for multiplexing of physical channels and a handover time for any TX-RX or RX-TX.

For details on steps 71 and 72, please refer to steps 21 and 22, which will not be repeated here.

It should be noted that the method provided by the embodiments of the disclosure may be performed alone, or may be performed in combination with some methods in the embodiments, or may be performed in combination with some methods in the related art.

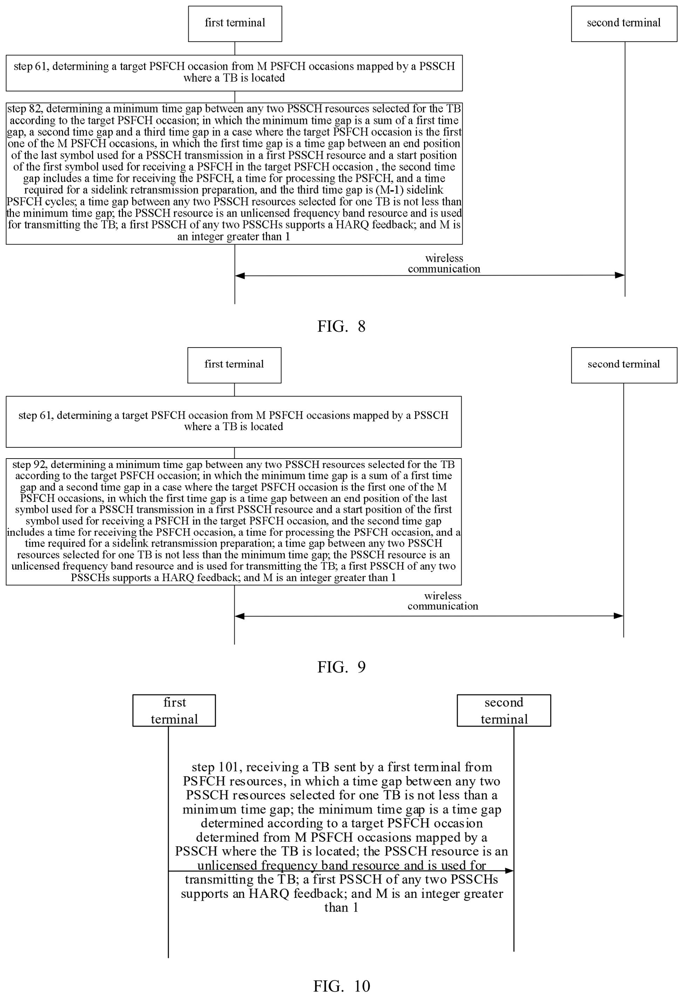

As shown in FIG. 8, an embodiment provides a method for determining a PSSCH resource, performed by a first terminal, including the following steps.

In step 81, a target PSFCH occasion is determined from M PSFCH occasions mapped by a PSSCH where a TB is located.

In step 82, a minimum time gap between any two PSSCH resources selected for the TB is determined according to the target PSFCH occasion, in which the minimum time gap is a sum of a first time gap, a second time gap and a third time gap in a case where the target PSFCH occasion is the first one of the M PSFCH occasions, where the first time gap is a time gap between an end position of the last symbol used for transmitting the PSSCH in a first PSSCH resource and a start position of the first symbol used for receiving a PSFCH in the target PSFCH occasion, the second time gap includes a time for receiving the PSFCH, a time for processing the PSFCH, and a time required for an SL retransmission preparation, and the third time gap is (M-1) SL PSFCH periods. A time gap between any two PSSCH resources selected for one TB is not less than the minimum time gap. The PSSCH resource is an unlicensed frequency band resource and is used for transmitting the TB. A first PSSCH of any two PSSCHs supports a HARQ feedback. M is an integer greater than 1.

In an embodiment, the time for receiving and processing the PSFCH includes a necessary processing time for multiplexing of physical channels and a handover time for any TX-RX or RX-TX.

The SL PSFCH period may be sl-PSFCH-Period.

For details on steps 81 and 82, please refer to steps 21 and 22, which will not be repeated here.

It should be noted that the method provided by the embodiments of the disclosure may be performed alone, or may be performed in combination with some methods in the embodiments, or may be performed in combination with some methods in the related art.

As shown in FIG. 9, an embodiment provides a method for determining a PSSCH resource, performed by a first terminal, including the following steps.

In step 91, a target PSFCH occasion is determined from M PSFCH occasions mapped by a PSSCH where a TB is located.

In step 92, a minimum time gap between any two PSSCH resources selected for the TB is determined according to the target PSFCH occasion, in which the minimum time gap is a sum of a first time gap and a second time gap in a case where the target PSFCH occasion is the first one of the M PSFCH occasions, where the first time gap is a time gap between an end position of the last symbol used for transmitting the PSSCH in a first PSSCH resource and a start position of the first symbol used for receiving a PSFCH in the target PSFCH occasion, and the second time gap includes a time for receiving the PSFCH, a time for processing the PSFCH, and a time required for an SL retransmission preparation. A time gap between any two PSSCH resources selected for one TB is not less than the minimum time gap. The PSSCH resource is an unlicensed frequency band resource and is used for transmitting the TB. A first PSSCH of any two PSSCHs supports a HARQ feedback. M is an integer greater than 1.

In an embodiment, the time for receiving and processing the PSFCH includes a necessary processing time for multiplexing of physical channels and a handover time for any TX-RX or RX-TX.

For details on steps 91 and 92, please refer to steps 21 and 22, which will not be repeated here.

It should be noted that the method provided by the embodiments of the disclosure may be performed alone, or may be performed in combination with some methods in the embodiments, or may be performed in combination with some methods in the related art.

As shown in FIG. 10, an embodiment provides a method for transmitting a PSSCH resource, performed by a second terminal, including the following steps.

In step 101, a TB sent by a first terminal is received from PSFCH resources.

A time gap between any two PSSCH resources selected for one TB is not less than a minimum time gap, in which the minimum time gap is a time gap determined according to a target PSFCH occasion determined from M PSFCH occasions mapped by a PSSCH where the TB is located. The PSSCH resource is an unlicensed frequency band resource and is used for transmitting the TB. A first PSSCH of any two PSSCHs supports a HARQ feedback. M is an integer greater than 1.

In an embodiment, the TB sent by the first terminal is received from the PSFCH resources; in which the time gap between any two PSSCH resources selected for one TB is not less than the minimum time gap. The minimum time gap is the time gap determined according to the target PSFCH occasion determined from the M PSFCH occasions mapped by the PSSCH where the TB is located. The PSSCH resource is the unlicensed frequency band resource and is used for transmitting the TB. The first PSSCH of any two PSSCHs supports the HARQ feedback. M is an integer greater than 1. The minimum time gap is a sum of a first time gap and a second time gap in a case where the target PSFCH occasion is the M^{th} one of the M PSFCH occasions, in which the first time gap is a time gap between an end position of the last symbol used for transmitting the PSSCH in a first PSSCH resource and a start position of the first symbol used for receiving a PSFCH in the target PSFCH occasion.

In an embodiment, the second time gap is a sum of a time for receiving the PSFCH, a time for processing the PSFCH, and a time required for an SL retransmission preparation.

In an embodiment, the time for receiving and processing the PSFCH includes a necessary processing time for multiplexing of physical channels and a handover time for any TX-RX or RX-TX.

In an embodiment, the TB sent by the first terminal is received from the PSFCH resources, in which the time gap between any two PSSCH resources selected for one TB is not less than the minimum time gap. The minimum time gap is the time gap determined according to the target PSFCH occasion determined from the M PSFCH occasions mapped by the PSSCH where the TB is located. The PSSCH resource is the unlicensed frequency band resource and is used for transmitting the TB. The first PSSCH of any two PSSCHs supports the HARQ feedback. M is an integer greater than 1. The minimum time gap is the sum of the first time gap and the second time gap in a case where the target PSFCH occasion is the M^{th} one of the M PSFCH occasions, in which the first time gap is the time gap between the end position of the last symbol used for transmitting the PSSCH in the first PSSCH resource and the start position of the first symbol used for receiving the PSFCH in the target PSFCH occasion, and the second time gap includes the time for receiving the PSFCH, the time for processing the PSFCH, and the time required for the SL retransmission preparation.

In an embodiment, the TB sent by the first terminal is received from the PSFCH resources, in which the time gap between any two PSSCH resources selected for one TB is not less than the minimum time gap. The minimum time gap is the time gap determined according to the target PSFCH occasion determined from the M PSFCH occasions mapped by the PSSCH where the TB is located. The PSSCH resource is the unlicensed frequency band resource and is used for transmitting the TB. The first PSSCH of any two PSSCHs supports the HARQ feedback. M is an integer greater than 1. The PSSCH includes an initially transmitted PSSCH and a retransmitted PSSCH. The HARQ feedback is not performed on PSFCH occasions subsequent to the first one of PSFCH occasions mapped by the initially transmitted PSSCH, and the HARQ feedback is performed on PSFCH occasions mapped by the retransmitted PSSCH, in which the first one of PSFCH occasions refers to the first one where the LBT is successful among the M PSFCH occasions.

For example, in a case where the first terminal does not receive any HARQ information on the first one of PSFCH occasions, the first terminal uses selected retransmission resources for retransmission. At this time, the second terminal does not perform the HARQ feedback on the initially transmitted PSSCH on the remaining PSFCH occasions mapped by the initially transmitted PSSCH (the PSFCH occasions subsequent to the first one of PSFCH occasions), and only performs the HARQ feedback on the retransmitted PSSCH. Therefore, the second terminal only feeds back 1 bit of HARQ information for the TB, and the first terminal also only receive 1 bit of HARQ feedback information.

In an embodiment, the TB sent by the first terminal is received from the PSFCH resources, in which the time gap between any two PSSCH resources selected for one TB is not less than the minimum time gap. The minimum time gap is the time gap determined according to the target PSFCH occasion determined from the M PSFCH occasions mapped by the PSSCH where the TB is located. The PSSCH resource is the unlicensed frequency band resource and is used for transmitting the TB. The first PSSCH of any two PSSCHs supports the HARQ feedback. M is an integer greater than 1. The PSSCH includes the initially transmitted PSSCH and the retransmitted PSSCH, and the HARQ feedback is performed on the initially transmitted PSSCH and performing the HARQ feedback on the retransmitted PSSCH.

For example, in a case where the first terminal does not receive any HARQ information on the first one of PSFCH occasions, the first terminal uses the selected retransmission resources for the retransmission. At this time, the second terminal performs the HARQ feedback on the initially transmitted PSSCH, and also performs the HARQ feedback on the retransmitted PSSCH. However, the second terminal combines the HARQ information of the initially transmitted PSSCH and the HARQ information of the retransmitted PSSCH and feeds back 1 bit of HARQ information. A receiving UE feeds back this 1 bit of HARQ information on the PSFCH occasions mapped by the retransmitted PSSCH, and the first terminal only receive 1 bit of HARQ feedback information.

In an embodiment, the TB sent by the first terminal is received from the PSFCH resources, in which the time gap between any two PSSCH resources selected for one TB is not less than the minimum time gap. The minimum time gap is the time gap determined according to the target PSFCH occasion determined from the M PSFCH occasions mapped by the PSSCH where the TB is located. The PSSCH resource is the unlicensed frequency band resource and is used for transmitting the TB. The first PSSCH of any two PSSCHs supports the HARQ feedback. M is an integer greater than 1. The PSSCH includes the initially transmitted PSSCH and the retransmitted PSSCH. A combined HARQ feedback result is obtained by combining a HARQ feedback result of the initially transmitted PSSCH and a HARQ feedback result of the retransmitted PSSCH, and the combined HARQ feedback result is fed back on PSFCH occasions mapped by the retransmitted PSSCH.

For example, the second terminal performs one of the following.

For the initially transmitted PSSCH, the second terminal decodes to obtain an acknowledgment (ACK), and for the retransmitted PSSCH, the second terminal decodes to obtain an ACK. The second terminal then combines the HARQ information of the initially transmitted PSSCH and the HARQ information of the retransmitted PSSCH into an ACK, and the second terminal feeds back a 1-bit ACK to the first terminal.

For the initially transmitted PSSCH, the second terminal decodes to obtain an ACK, and for the retransmitted PSSCH, the second terminal decodes to obtain a NACK. The second terminal then combines the HARQ information of the initially transmitted PSSCH and the HARQ information of the retransmitted PSSCH into an ACK, and the second terminal feeds back a 1-bit ACK to the first terminal.

For the initially transmitted PSSCH, the second terminal decodes to obtain a NACK, and for the retransmitted PSSCH, the second terminal decodes to obtain an ACK. The second terminal then combines the HARQ information of the initially transmitted PSSCH and the HARQ information of the retransmitted PSSCH into an ACK, and the second terminal feeds back a 1-bit ACK to the first terminal.

For the initially transmitted PSSCH, the second terminal decodes to obtain a NACK, and for the retransmitted PSSCH, the second terminal decodes to obtain a NACK. The second terminal then combines the HARQ information of the initially transmitted PSSCH and the HARQ information of the retransmitted PSSCH into a NACK, and the second terminal feeds back a 1-bit NACK to the first terminal.

In an embodiment, the TB sent by the first terminal is received from the PSFCH resources, in which the time gap between any two PSSCH resources selected for one TB is not less than the minimum time gap. The minimum time gap is the time gap determined according to the target PSFCH occasion determined from the M PSFCH occasions mapped by the PSSCH where the TB is located. The PSSCH resource is the unlicensed frequency band resource and is used for transmitting the TB. The first PSSCH of any two PSSCHs supports the HARQ feedback. M is an integer greater than 1. The PSSCH includes the initially transmitted PSSCH and the retransmitted PSSCH. The HARQ feedback is performed on PSFCH occasions subsequent to the first one of PSFCH occasions mapped by the initially transmitted PSSCH, and the HARQ feedback is performed on PSFCH occasions mapped by the retransmitted PSSCH, in which the first one of PSFCH occasions refers to the first one where the LBT is successful among the M PSFCH occasions.

For example, the second terminal performs one of the following.

For the initially transmitted PSSCH, the second terminal feeds back an ACK in a case where decoding succeeds, and for the retransmitted PSSCH, the second terminal feeds back an ACK in a case where decoding succeeds.

For the initially transmitted PSSCH, the second terminal feeds back a NACK in a case where decoding fails, and for the retransmitted PSSCH, the second terminal feeds back an ACK in a case where decoding succeeds.

For the initially transmitted PSSCH, the second terminal feeds back an ACK in a case where decoding succeeds, and for the retransmitted PSSCH, the second terminal feeds back a NACK in a case where decoding fails.

For the initially transmitted PSSCH, the second terminal feeds back a NACK in a case where decoding fails, and for the retransmitted PSSCH, the second terminal feeds back a NACK in a case where decoding fails.

In an embodiment, the TB sent by the first terminal is received from the PSFCH resources, in which the time gap between any two PSSCH resources selected for one TB is not less than the minimum time gap. The minimum time gap is the time gap determined according to the target PSFCH occasion determined from the M PSFCH occasions mapped by the PSSCH where the TB is located. The PSSCH resource is the unlicensed frequency band resource and is used for transmitting the TB. The first PSSCH of any two PSSCHs supports the HARQ feedback. M is an integer greater than 1. The minimum time gap is a sum of a first time gap and a second time gap in a case where the target PSFCH occasion is the first one of the M PSFCH occasions, in which the first time gap is the time gap between the end position of the last symbol used for transmitting the PSSCH in the first PSSCH resource and the start position of the first symbol used for receiving the PSFCH in the target PSFCH occasion.

In an embodiment, the second time gap is a sum of a time for receiving the PSFCH at the M^{th} one of the M PSFCH occasions, a time for processing the PSFCH, and a time required for an SL retransmission preparation.

In an embodiment, the time for receiving and processing the PSFCH includes a necessary processing time for multiplexing of physical channels and a handover time for any TX-RX or RX-TX.

In an embodiment, the TB sent by the first terminal is received from the PSFCH resources, in which the time gap between any two PSSCH resources selected for one TB is not less than the minimum time gap. The minimum time gap is the time gap determined according to the target PSFCH occasion determined from the M PSFCH occasions mapped by the PSSCH where the TB is located. The PSSCH resource is the unlicensed frequency band resource and is used for transmitting the TB. The first PSSCH of any two PSSCHs supports the HARQ feedback. M is an integer greater than 1. The minimum time gap is a sum of a first time gap and a second time gap in a case where the target PSFCH occasion is the first one of the M PSFCH occasions, in which the first time gap is the time gap between the end position of the last symbol used for transmitting the PSSCH in the first PSSCH resource and the start position of the first symbol used for receiving the PSFCH in the target PSFCH occasion, and the second time gap includes the time for receiving the PSFCH at the M^{th} one of the M PSFCH occasions, the time for processing the PSFCH, and the time required for the SL retransmission preparation.

In an embodiment, the TB sent by the first terminal is received from the PSFCH resources, in which the time gap between any two PSSCH resources selected for one TB is not less than the minimum time gap. The minimum time gap is the time gap determined according to the target PSFCH occasion determined from the M PSFCH occasions mapped by the PSSCH where the TB is located. The PSSCH resource is the unlicensed frequency band resource and is used for transmitting the TB. The first PSSCH of any two PSSCHs supports the HARQ feedback. M is an integer greater than 1. The minimum time gap is a sum of a first time gap, a second time gap and a third time gap in a case where the target PSFCH occasion is the first one of the M PSFCH occasions, in which the first time gap is the time gap between the end position of the last symbol used for transmitting the PSSCH in the first PSSCH resource and the start position of the first symbol used for receiving the PSFCH in the target PSFCH occasion.

In an embodiment, the second time gap is the sum of the time for receiving the PSFCH, the time for processing the PSFCH, and the time required for the SL retransmission preparation.

In an embodiment, the third time gap is (M-1) SL PSFCH periods.

In an embodiment, the time for receiving and processing the PSFCH includes a necessary processing time for multiplexing of physical channels and a handover time for any TX-RX or RX-TX.

In an embodiment, the TB sent by the first terminal is received from the PSFCH resources, in which the time gap between any two PSSCH resources selected for one TB is not less than the minimum time gap. The minimum time gap is the time gap determined according to the target PSFCH occasion determined from the M PSFCH occasions mapped by the PSSCH where the TB is located. The PSSCH resource is the unlicensed frequency band resource and is used for transmitting the TB. The first PSSCH of any two PSSCHs supports the HARQ feedback. M is an integer greater than 1. The minimum time gap is a sum of a first time gap, a second time gap and a third time gap in a case where the target PSFCH occasion is the first one of the M PSFCH occasions, in which the first time gap is the time gap between the end position of the last symbol used for transmitting the PSSCH in the first PSSCH resource and the start position of the first symbol used for receiving the PSFCH in the target PSFCH occasion, the second time gap includes the time for receiving the PSFCH, the time for processing the PSFCH, and the time required for the SL retransmission preparation, and the third time gap is (M-1) SL PSFCH periods.

In an embodiment, the TB sent by the first terminal is received from the PSFCH resources, in which the time gap between any two PSSCH resources selected for one TB is not less than the minimum time gap. The minimum time gap is the time gap determined according to the target PSFCH occasion determined from the M PSFCH occasions mapped by the PSSCH where the TB is located. The PSSCH resource is the unlicensed frequency band resource and is used for transmitting the TB. The first PSSCH of any two PSSCHs supports the HARQ feedback. M is an integer greater than 1. The minimum time gap is a sum of a first time gap and a second time gap in a case where the target PSFCH occasion is the first one of the M PSFCH occasions, in which the first time gap is the time gap between the end position of the last symbol used for transmitting the PSSCH in the first PSSCH resource and the start position of the first symbol used for receiving the PSFCH in the target PSFCH occasion.

In an embodiment, the second time gap is the sum of the time for receiving the PSFCH, the time for processing the PSFCH, and the time required for the SL retransmission preparation.

In an embodiment, the time for receiving and processing the PSFCH includes a necessary processing time for multiplexing of physical channels and a handover time for any TX-RX or RX-TX.

In an embodiment, the TB sent by the first terminal is received from the PSFCH resources, in which the time gap between any two PSSCH resources selected for one TB is not less than the minimum time gap. The minimum time gap is the time gap determined according to the target PSFCH occasion determined from the M PSFCH occasions mapped by the PSSCH where the TB is located. The PSSCH resource is the unlicensed frequency band resource and is used for transmitting the TB. The first PSSCH of any two PSSCHs supports the HARQ feedback. M is an integer greater than 1.The minimum time gap is a sum of a first time gap and a second time gap in a case where the target PSFCH occasion is the first one of the M PSFCH occasions, in which the first time gap is the time gap between the end position of the last symbol used for transmitting the PSSCH in the first PSSCH resource and the start position of the first symbol used for receiving the PSFCH in the target PSFCH occasion, and the second time gap includes the time for receiving the PSFCH, the time for processing the PSFCH, and the time required for the SL retransmission preparation.

In an embodiment, the TB sent by the first terminal is received from the PSFCH resources, in which the time gap between any two PSSCH resources selected for one TB is not less than the minimum time gap. The minimum time gap is the time gap determined according to the target PSFCH occasion determined from the M PSFCH occasions mapped by the PSSCH where the TB is located. The PSSCH resource is the unlicensed frequency band resource and is used for transmitting the TB. The first PSSCH of any two PSSCHs supports the HARQ feedback. M is an integer greater than 1. The LBT is performed on the M PSFCH occasions, and the HARQ information is sent at positions of one or more candidate PSFCH occasions where the LBT is successful.

In an embodiment, the TB sent by the first terminal is received from the PSFCH resources, in which the time gap between any two PSSCH resources selected for one TB is not less than the minimum time gap. The minimum time gap is the time gap determined according to the target PSFCH occasion determined from the M PSFCH occasions mapped by the PSSCH where the TB is located. The PSSCH resource is the unlicensed frequency band resource and is used for transmitting the TB. The first PSSCH of any two PSSCHs supports the HARQ feedback. M is an integer greater than 1. The HARQ information is only sent at a position of the first one of candidate PSFCH occasions where the LBT is successful, and the LBT is not performed on PSFCH occasions subsequent to the first one of the candidate PSFCH occasions where the LBT is successful.

It should be noted that the method provided by the embodiments of the disclosure may be performed alone, or may be performed in combination with some methods in the embodiments, or may be performed in combination with some methods in the related art.

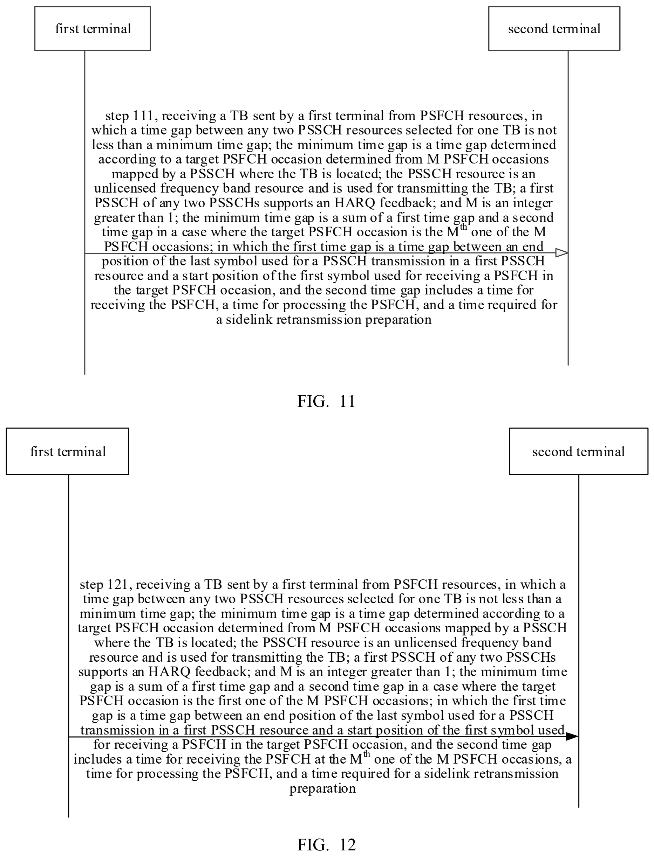

As shown in FIG. 11, an embodiment provides a method for transmitting a PSSCH resource, performed by a second terminal, including the following steps.

In step 111, a TB sent by a first terminal is received from PSFCH resources.

A time gap between any two PSSCH resources selected for one TB is not less than a minimum time gap, in which the minimum time gap is a time gap determined according to a target PSFCH occasion determined from M PSFCH occasions mapped by a PSSCH where the TB is located. The PSSCH resource is an unlicensed frequency band resource and is used for transmitting the TB. A first PSSCH of any two PSSCHs supports a HARQ feedback. M is an integer greater than 1. The minimum time gap is a sum of a first time gap and a second time gap in a case where the target PSFCH occasion is the M^{th} one of the M PSFCH occasions, in which the first time gap is a time gap between an end position of the last symbol used for transmitting the PSSCH in a first PSSCH resource and a start position of the first symbol used for receiving a PSFCH in the target PSFCH occasion, and the second time gap includes a time for receiving the PSFCH, a time for processing the PSFCH, and a time required for an SL retransmission preparation.

In an embodiment, the time for receiving and processing the PSFCH includes a necessary processing time for multiplexing of physical channels and a handover time for any TX-RX or RX-TX.

For details on step 111, please refer to step 101, which will not be repeated here.

It should be noted that the method provided by the embodiments of the disclosure may be performed alone, or may be performed in combination with some methods in the embodiments, or may be performed in combination with some methods in the related art.

As shown in FIG. 12, an embodiment provides a method for transmitting a PSSCH resource, performed by a second terminal, including the following steps.

In step 121, a TB sent by a first terminal is received from PSFCH resources.

A time gap between any two PSSCH resources selected for one TB is not less than a minimum time gap, in which the minimum time gap is a time gap determined according to a target PSFCH occasion determined from M PSFCH occasions mapped by a PSSCH where the TB is located. The PSSCH resource is an unlicensed frequency band resource and is used for transmitting the TB. A first PSSCH of any two PSSCHs supports a HARQ feedback. M is an integer greater than 1. The minimum time gap is a sum of a first time gap and a second time gap in a case where the target PSFCH occasion is the first one of the M PSFCH occasions, in which the first time gap is a time gap between an end position of the last symbol used for transmitting the PSSCH in a first PSSCH resource and a start position of the first symbol used for receiving a PSFCH in the target PSFCH occasion, and the second time gap includes a time for receiving the PSFCH at the M^{th} one of the M PSFCH occasions, a time for processing the PSFCH, and a time required for an SL retransmission preparation.

In an embodiment, the time for receiving and processing the PSFCH includes a necessary processing time for multiplexing of physical channels and a handover time for any TX-RX or RX-TX.

For details on step 121, please refer to step 101, which will not be repeated here.

It should be noted that the method provided by the embodiments of the disclosure may be performed alone, or may be performed in combination with some methods in the embodiments, or may be performed in combination with some methods in the related art.

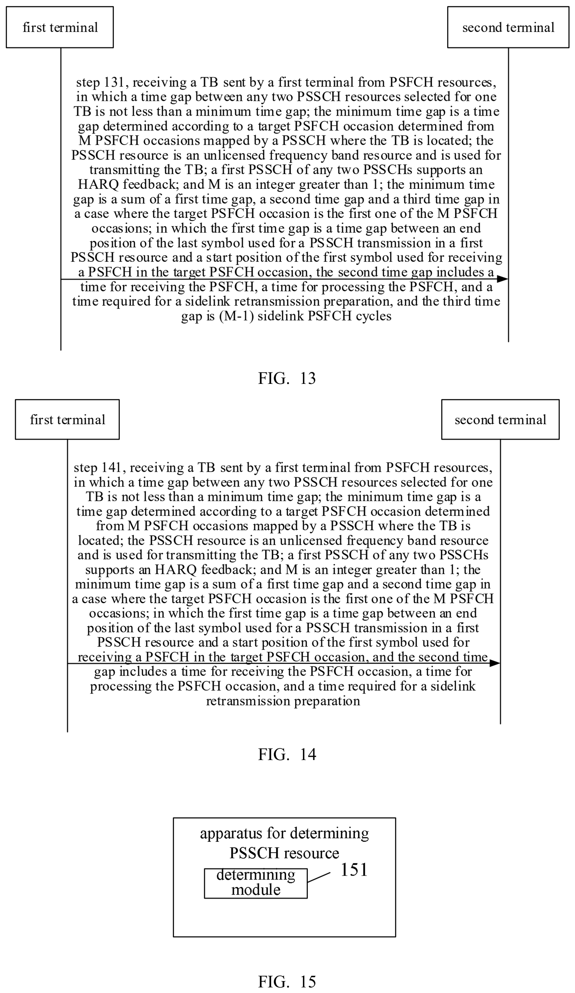

As shown in FIG. 13, an embodiment provides a method for transmitting a PSSCH resource, performed by a second terminal, including the following steps.

In step 131, a TB sent by a first terminal is received from PSFCH resources.

A time gap between any two PSSCH resources selected for one TB is not less than a minimum time gap, in which the minimum time gap is a time gap determined according to a target PSFCH occasion determined from M PSFCH occasions mapped by a PSSCH where the TB is located. The PSSCH resource is an unlicensed frequency band resource and is used for transmitting the TB. A first PSSCH of any two PSSCHs supports a HARQ feedback. M is an integer greater than 1. The minimum time gap is a sum of a first time gap, a second time gap and a third time gap in a case where the target PSFCH occasion is the first one of the M PSFCH occasions, in which the first time gap is a time gap between an end position of the last symbol used for transmitting the PSSCH in a first PSSCH resource and a start position of the first symbol used for receiving a PSFCH in the target PSFCH occasion, the second time gap includes a time for receiving the PSFCH, a time for processing the PSFCH, and a time required for an SL retransmission preparation, and the third time gap is (M-1) SL PSFCH periods.

In an embodiment, the time for receiving and processing the PSFCH includes a necessary processing time for multiplexing of physical channels and a handover time for any TX-RX or RX-TX.

For details on step 131, please refer to step 101, which will not be repeated here.

It should be noted that the method provided by the embodiments of the disclosure may be performed alone, or may be performed in combination with some methods in the embodiments, or may be performed in combination with some methods in the related art.

As shown in FIG. 14, an embodiment provides a method for transmitting a PSSCH resource, performed by a second terminal, including the following step.

In step 141, a TB sent by a first terminal is received from PSFCH resources.

A time gap between any two PSSCH resources selected for one TB is not less than a minimum time gap, in which the minimum time gap is a time gap determined according to a target PSFCH occasion determined from M PSFCH occasions mapped by a PSSCH where the TB is located. The PSSCH resource is an unlicensed frequency band resource and is used for transmitting the TB. A first PSSCH of any two PSSCHs supports a HARQ feedback. M is an integer greater than 1. The minimum time gap is a sum of a first time gap and a second time gap in a case where the target PSFCH occasion is the first one of the M PSFCH occasions, in which the first time gap is a time gap between an end position of the last symbol used for transmitting the PSSCH in a first PSSCH resource and a start position of the first symbol used for receiving a PSFCH in the target PSFCH occasion, and the second time gap includes a time for receiving the PSFCH occasion, a time for processing the PSFCH occasion, and a time required for an SL retransmission preparation.

In an embodiment, the time for receiving and processing the PSFCH includes a necessary processing time for multiplexing of physical channels and a handover time for any TX-RX or RX-TX.

For details on step 141, please refer to step 101, which will not be repeated here.

It should be noted that the method provided by the embodiments of the disclosure may be performed alone, or may be performed in combination with some methods in the embodiments, or may be performed in combination with some methods in the related art.

As shown in FIG. 15, an embodiment of the disclosure provides an apparatus for determining a PSSCH resource, the apparatus including:

a determining module 151 configured to determine a target PSFCH occasion from M PSFCH occasions mapped by a PSSCH where a TB is located; and determine, according to the target PSFCH occasion, a minimum time gap between any two PSSCH resources selected for the TB, in which a time gap between any two PSSCH resources selected for one TB is not less than the minimum time gap; the PSSCH resource is an unlicensed frequency band resource and is used for transmitting the TB; a first PSSCH of any two PSSCHs supports a HARQ feedback; and M is an integer greater than 1.

It should be noted that the method provided by the embodiments of the disclosure may be performed alone, or may be performed in combination with some methods in the embodiments, or may be performed in combination with some methods in the related art.

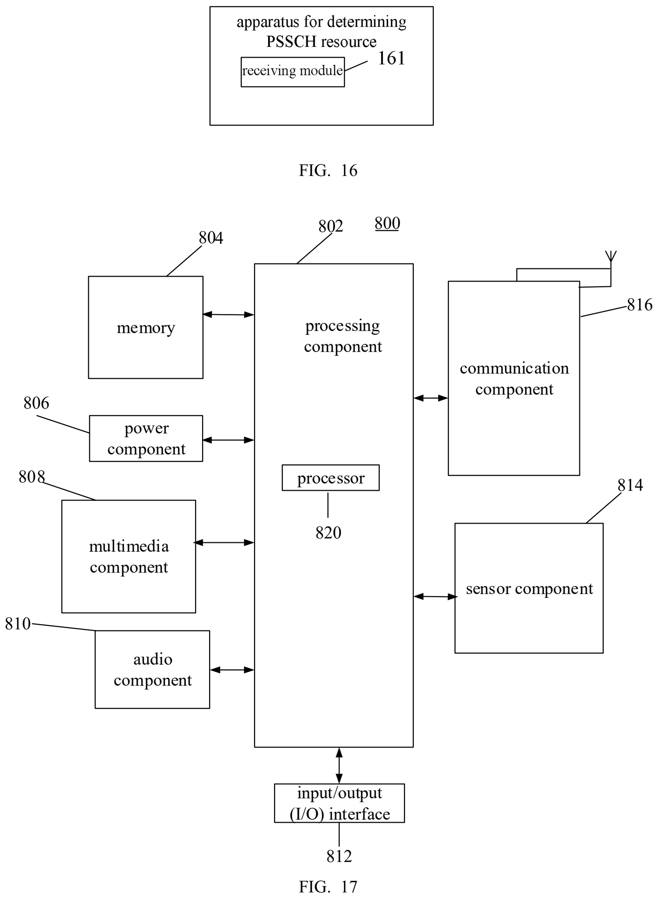

As shown in FIG. 16, an embodiments of the disclosure provides an apparatus for transmitting a PSSCH resource, the apparatus including:
a receiving module 161 configured to receive a TB sent by a first terminal from physical PSFCH resources,
in which a time gap between any two PSSCH resources selected for one TB is not less than a minimum time gap; the minimum time gap is a time gap determined according to a target PSFCH occasion determined from M PSFCH occasions mapped by a PSSCH where the TB is located; the PSSCH resource is an unlicensed frequency band resource and is used for transmitting the TB; a first PSSCH of any two PSSCHs supports a HARQ feedback; and M is an integer greater than 1.

It should be noted that the method provided by the embodiments of the disclosure may be performed alone, or may be performed in combination with some methods in the embodiments, or may be performed in combination with some methods in the related art.

An embodiment of the disclosure provides an information indication system, including a terminal and an access network device, in which the terminal is configured to execute any method executed by the terminal in the disclosure, and the access network device is configured to execute any method executed by the access network device in the disclosure.

An embodiment of the disclosure provides a communication device, including:
a processor; and
a memory for storing processor-executable instructions,
in which the processor is configured to implement the method applied to any embodiment of the disclosure when running the executable instructions.

The processor may include various types of storage media that are non-transitory computer storage media that may continue to memorize the information stored thereon after the communication device is powered down.

The processor may be connected to the memory via a bus or the like for reading the executable program stored on the memory.

An embodiment of the disclosure provides a computer storage medium having a computer executable program stored therein, when executed by a processor, enable the method of any embodiment of the disclosure to be implemented.

With respect to the apparatuses in the above embodiments, the specific manners for performing operations for individual modules therein have been described in detail in the embodiments regarding the method, which will not be elaborated herein.

As shown in FIG. 17, an embodiment of the disclosure provides a structure of the terminal.

Referring to the terminal 800 shown in FIG. 17, the terminal 800 may specifically be a mobile phone, a computer, a digital broadcast terminal, a messaging device, a game console, a tablet device, a medical device, a fitness device, a personal digital assistant, or the like.

Referring to FIG. 17, the terminal 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the terminal 800, such as the operations associated with display, telephone calls, data communications, camera operations, and recording operations. The processing component 802 may include one or more processors 820 to execute instructions to perform all or some of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the terminal 800. Examples of such data include instructions for any applications or methods operated on the terminal 800, contact data, phonebook data, messages, pictures, video, etc. The memory 804 may be implemented by using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the terminal 800. The power component 806 may include a power management system, one or more power sources, and any other components associated with generation, management, and distribution of power in the terminal 800.

The multimedia component 808 includes a screen providing an output interface between the terminal 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and/or the rear camera may receive an external multimedia datum while the terminal 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the terminal 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, a button and the like. The button may include, but is not limited to, a home button, a volume button, a starting button, and a locking button.

The sensor component 814 includes one or more sensors to provide status assessments of various aspects of the terminal 800. For instance, the sensor component 814 may detect an open/closed status of the terminal 800, relative positioning of components, e.g., the display and the keypad, of the terminal 800, a change in position of the terminal 800 or a component of the terminal 800, a presence or absence of user contact with the terminal 800, an orientation or an acceleration/deceleration of the terminal 800, and a change in temperature of the terminal 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may further include an accelerometer sensor, a gyroscope sensor, a magnetic sensor, a pressure sensor, or a temperature sensor.

The communication component 816 is configured to facilitate communication, wired or wireless, between the terminal 800 and other devices. The terminal 800 can access a wireless network based on a communication standard, such as Wi-Fi, 2G, or 3G, or a combination thereof. In one embodiment, the communication component 816 receives a broadcast signal or broadcast associated information from an external broadcast management system via a broadcast channel. In one embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In embodiments, the terminal 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In embodiments, there is further provided a non-transitory computer-readable storage medium (such as the memory 804) including instructions that, when executed by the processor 820 of the terminal 800, to perform any of the above-described methods. For example, the non-transitory computer-readable storage medium may be a ROM, a RAM, a CD-ROM, a magnetic tape, a floppy disc, an optical data storage device, and the like.

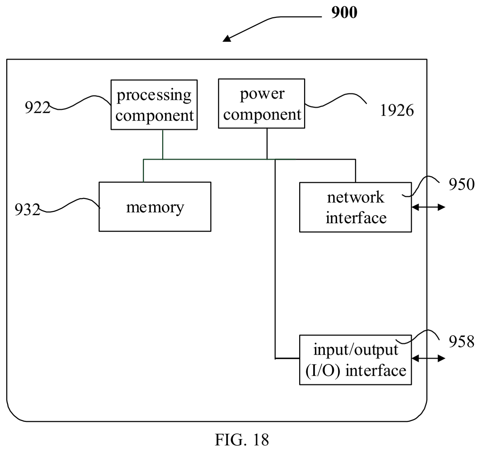

As shown in FIG. 18, an embodiment of the disclosure illustrates a structure of the base station. For example, the base station 900 may be provided as a network-side device. Referring to FIG. 18, the base station 900 includes a processing component 922, one or more processors and a memory resource represented by a memory 932. The processing component 922 may further include one or more processors. The memory resource is configured to store instructions executable by the processing component 922, such as an application program. The application program stored in the memory 932 may include one or more modules each corresponding to a set of instructions. In addition, the processing component 922 is configured to execute the instructions to perform the above method, i.e. any of the above-described methods performed by the base station.

The base station 900 further includes a power component 926 configured to perform a power management on the base station 900, a wired or wireless network interface 950 configured to connect the base station 900 to the network, and an I/O interface 958. The base station 900 may operate an operating system stored in the memory 932, such as Windows Server TM, Mac OS XTM, Unix TM, Linux TM, Free BSDTM, or the like.

Other implements of the disclosure will be apparent to those skilled in the art from consideration of the specification and practice of the disclosure disclosed here. The disclosure is intended to cover any variations, uses, or adaptations of the disclosure following the general principles thereof and including common knowledge or conventional technical means known in the art but not disclosed in the disclosure. The specification and examples should be considered as exemplary only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. The scope of the disclosure is only limited by the appended claims.

## Claims

1. A method for determining a physical sidelink shared channel (PSSCH) resource, performed by a first terminal, comprising:
determining a target physical sidelink feedback channel (PSFCH) occasion from M PSFCH occasions mapped by a PSSCH where a transport block (TB) is located; and
determining, according to the target PSFCH occasion, a minimum time gap between any two PSSCH resources selected for the TB,
wherein a time gap between any two PSSCH resources selected for one TB is not less than the minimum time gap; the PSSCH resource is an unlicensed frequency band resource and is used for transmitting the TB; a first PSSCH of any two PSSCHs supports a hybrid automatic repeat request (HARQ) feedback; and M is an integer greater than 1.

2. The method of claim 1, wherein the minimum time gap is a sum of a first time gap and a second time gap in a case where the target PSFCH occasion is the M^{th} one of the M PSFCH occasions, wherein the first time gap is a time gap between an end position of a last symbol used for transmitting the PSSCH in a first PSSCH resource and a start position of a first symbol used for receiving a PSFCH in the target PSFCH occasion, and the second time gap comprises a time for receiving the PSFCH, a time for processing the PSFCH, and a time required for a sidelink retransmission preparation.

3. The method of claim 1, wherein the minimum time gap is a sum of a first time gap and a second time gap in a case where the target PSFCH occasion is the first one of the M PSFCH occasions, wherein the first time gap is a time gap between an end position of a last symbol used for transmitting the PSSCH in a first PSSCH resource and a start position of a first symbol used for receiving a PSFCH in the target PSFCH occasion, and the second time gap comprises a time for receiving the PSFCH at the M^{th} one of the M PSFCH occasions, a time for processing the PSFCH, and a time required for a sidelink retransmission preparation.

4. The method of claim 1, wherein the minimum time gap is a sum of a first time gap, a second time gap and a third time gap in a case where the target PSFCH occasion is the first one of the M PSFCH occasions, wherein the first time gap is a time gap between an end position of a last symbol used for transmitting the PSSCH in a first PSSCH resource and a start position of a first symbol used for receiving a PSFCH in the target PSFCH occasion, the second time gap comprises a time for receiving the PSFCH, a time for processing the PSFCH, and a time required for a sidelink retransmission preparation, and the third time gap is (M-1) sidelink PSFCH periods.

5. The method of claim 1, wherein the minimum time gap is a sum of a first time gap and a second time gap in a case where the target PSFCH occasion is the first one of the M PSFCH occasions, wherein the first time gap is a time gap between an end position of a last symbol used for transmitting the PSSCH in a first PSSCH resource and a start position of a first symbol used for receiving a PSFCH in the target PSFCH occasion, and the second time gap comprises a time for receiving the PSFCH, a time for processing the PSFCH, and a time required for a sidelink retransmission preparation.

6. The method of any one of claims 1 to 5, wherein the method further comprises:
in a case where HARQ information is not received at the first one of the M PSFCH occasions, using a retransmission resource selected to perform a retransmission;
in a case where HARQ information is not received at the N^{th} one of the M PSFCH occasions, not using a retransmission resource selected to perform a retransmission, wherein N is an integer, and 1≦N≦M; and
in a case where HARQ information is not received at the M^{th} one of the M PSFCH occasions, using a retransmission resource selected to perform a retransmission.

7. The method of claim 1, further comprising:
sending the TB to a second terminal on the PSSCH resources selected for the TB.

8. A method for transmitting a physical sidelink shared channel (PSSCH) resource, performed by a second terminal, comprising:
receiving a transport block (TB) sent by a first terminal from physical sidelink feedback channel (PSFCH) resources,
wherein a time gap between any two PSSCH resources selected for one TB is not less than a minimum time gap; the minimum time gap is a time gap determined according to a target PSFCH occasion determined from M PSFCH occasions mapped by a PSSCH where the TB is located; the PSSCH resource is an unlicensed frequency band resource and is used for transmitting the TB; a first PSSCH of any two PSSCHs supports a hybrid automatic repeat request (HARQ) feedback; and M is an integer greater than 1.

9. The method of claim 8, further comprising:
performing a listen-before-talk (LBT) on the M PSFCH occasions; and
sending HARQ information at positions of one or more candidate PSFCH occasions where the LBT is successful.

10. The method of claim 9, wherein sending the HARQ information at the positions of the one or more candidate PSFCH occasions where the LBT is successful comprises:
sending the HARQ information only at a position of the first one of candidate PSFCH occasions where the LBT is successful, and not performing the LBT on PSFCH occasions subsequent to the first one of the candidate PSFCH occasions where the LBT is successful.

11. The method of claim 8, wherein the PSSCH comprises an initially transmitted PSSCH and a retransmitted PSSCH, and the method further comprises one of:
not performing HARQ feedback on PSFCH occasions subsequent to the first one of PSFCH occasions mapped by the initially transmitted PSSCH, and performing the HARQ feedback on PSFCH occasions mapped by the retransmitted PSSCH;
performing the HARQ feedback on the initially transmitted PSSCH and performing the HARQ feedback on the retransmitted PSSCH; and
performing the HARQ feedback on the PSFCH occasions subsequent to the first one of PSFCH occasions mapped by the initially transmitted PSSCH, and performing the HARQ feedback on PSFCH occasions mapped by the retransmitted PSSCH,
wherein the first one of PSFCH occasions refers to the first one where the LBT is successful among the M PSFCH occasions.

12. The method of claim 11, wherein performing the HARQ feedback on the initially transmitted PSSCH and performing the HARQ feedback on the retransmitted PSSCH comprises:
obtaining a combined HARQ feedback result by combining a HARQ feedback result of the initially transmitted PSSCH and a HARQ feedback result of the retransmitted PSSCH; and
feeding back the combined HARQ feedback result on PSFCH occasions mapped by the retransmitted PSSCH.

13. An apparatus for determining a physical sidelink shared channel (PSSCH) resource, comprising:
a determining module configured to determine a target physical sidelink feedback channel (PSFCH) occasion from M PSFCH occasions mapped by a PSSCH where a transport block (TB) is located; and determine, according to the target PSFCH occasion, a minimum time gap between any two PSSCH resources selected for the TB, wherein a time gap between any two PSSCH resources selected for one TB is not less than the minimum time gap; the PSSCH resource is an unlicensed frequency band resource and is used for transmitting the TB; a first PSSCH of any two PSSCHs supports a hybrid automatic repeat request (HARQ) feedback; and M is an integer greater than 1.

14. An apparatus for transmitting a physical sidelink shared channel (PSSCH) resource, comprising:
a receiving module configured to receive a transport block (TB) sent by a first terminal from physical sidelink feedback channel (PSFCH) resources,
wherein a time gap between any two PSSCH resources selected for one TB is not less than a minimum time gap; the minimum time gap is a time gap determined according to a target PSFCH occasion determined from M PSFCH occasions mapped by a PSSCH where the TB is located; the PSSCH resource is an unlicensed frequency band resource and is used for transmitting the TB; a first PSSCH of any two PSSCHs supports a hybrid automatic repeat request (HARQ) feedback; and M is an integer greater than 1.

15. A communication device, comprising:
one or more processors,
wherein the processor is configured to invoke instructions to enable the communication device to perform the method of any one of claims 1 to 7, or the method of any one of claims 8 to 12.

16. A storage medium storing instructions that, when executed on a communication device, enable the communication device to perform the method of any one of claims 1 to 7, or the method of any one of claims 8 to 12.
